# EUROPEAN PATENT APPLICATION

(11) **EP 1 217 543 A1**
(43) Date of publication of application: **26.06.2002**
(21) Application number: 00410160.6
(22) Date of filing: 22.12.2000
(51) Int. Cl.: G06F 17/30

(54) **Process and apparatus for automatically indexing documents of a set of computers of a network**

(71) Applicant: Hewlett-Packard Company, A Delaware Corporation, Palo Alto, CA 94304 (US)
(72) Inventor: Richard, Bruno, 38920 Crolles (FR); Vicard, Dominique, 38190 Bernin (FR)
(74) Representative: Lloyd, Richard Graham

(57) **Abstract**

A process for automatically indexing the documents stored in a computer involving the step of executing at regular interval a periodical backup operation of the system files and the user's documents. The backup operation is based on a scanning of all the files for the purpose of computing a signature, and the same operation is advantageously used for elaborating an index of the user's document stored within the computer. Preferably, the invention is used in a network environment and the backup and indexing operations are carried out by a server which takes advantage of the internal synergy between the backup and the indexing operation for the purpose of elaborating a centralized index of the documents available in the network, which documents could be retrieved from the database associated to the backup process. Access control rights are used for controlling the indexing process and for defining selective access to said documents.

## Description

### Technical field of the invention

The invention relates to telecommunications and more particularly to a process for automatically indexing files and documents associated with computers connected to a network.

### Background art

The development of computers and Information Handling Systems (I.H.S.) continuously increases the volume of information which is created, processed and stored within computers. Every user is now faced with the difficulty of managing this considerable information and the great number of documents stored within his computer and for retrieving particular files when he wishes to do so.

Software programs exist in the art for indexing the files of a computer for the purpose of facilitating their access to the user. Generally speaking, those solutions are based on a systematic scanning of the different files and specifically the particular documents containing user's data for the purpose of extracting relevant words and items which can serve as a direct access point to the individual files to which they refer.

As the indexing process involves the successive scanning of all the documents stored within a machine, such a process requires a non-negligible amount of processing resources at the level of the individual machine. This may hinder the use and the generalization of the indexing technique on the end user's computer.

In addition, most computers which are used in the environment of a company or a private organization are now connected to, or constitute, An example of such networks are referred to as Intranets. In such a corporate environment the distribution of and access to enterprise knowledge takes on particular importance and it is clear that the indexing operation should not be retained at the individual level of the end user of the computer but at the level of the network manager, e.g. the Information Technology (I.T.) Administrator.

Because the information which is continuously created, processed and stored within the network of a company has increased in importance, the IT Administrator now receives, in addition to his traditional remit, the task of preserving and indexing the documents of a corporation. It is also usually the responsibility of the IT Administrator to manage security issues raised by these particular type of intellectual assets.

It is therefore essential that the IT Administrator be given technical tools which facilitate, on one hand, access to safe and/or sensitive information for authorized users while preventing, on the other hand, any misuse of that information.

The problem to be solved by the present invention is to facilitate the incorporation of the indexing processes and techniques which are particularly adapted to a corporate environment for instance, while minimizing the processing resources required at the level of the local machine.

### Summary of the invention

In one aspect the invention provides for a process for indexing files residing on a computer, characterized by the steps of:
- executing one or more periodic backup operations on the files, said backup operation including the step of scanning the files;
- using said scanning operation to derive a set of itemized indexes for subsequent use in obtaining direct access to said files.

The process preferably executes a periodic backup of the system and/or user files, wherein preferably the user files are indexed.

During the backup operation of the user's document, the process may index the files for the purpose of creating a set of itemized indexes which can serve as a set of access points to those files.

A scanning operation may be used for both generating the signature of a file and for extracting the key words and indexes for that files.

This provides an indexing process which is well adapted to a corporate environment and which allows the creation of a centralized indexing system allowing storage and indexing of documents on a network while minimizing the processing resources required by the end user computers attached to the network.

It is a further object of the present invention to provide a network indexing system which is well adapted to achieve networked knowledge distribution while preserving the security of the documents that are indexed and prevent the unauthorized access to the indexed documents.

The process can be used for indexing a wide number of documents, including WORD ™ files, as well as compounds files such as emails, .cab files and the like.

By using the same scanning operation for the backup and indexing procedures, access to the files may be optimized as can be the amount of processing resources required for the backup and indexing operations. In addition, the backup and the indexing operations can be readily and simultaneously automated without requiring an additional intervention from the user.

It can be seen that the process is particularly adapted for use in network environments and for providing a centralized index of all the documents available within said networks.

Each local computer which is connected to the network may incorporate a Backup and Indexing agent which is adapted to substantially simultaneously perform a backup of the files - including the user's personal files - and the indexing of said files by a Backup and Indexing server communicating with said network.

In the corporate environment, the user is unaware of the indexing operation. Further, the IT administrator is given the technical tools to manage the intellectual assets of a given company by simultaneously controlling the backup and the indexing process at the server.

In a preferred embodiment, the Backup and Indexing server incorporates a centralized index which allows direct reference to and access from a local computer to documents available on the network, as well as a local indexes which may be transmitted back to the local computer.

Preferably, at least one indexing attribute is associated with each file for the purpose of controlling the indexing process executed by said Backup and Indexing server.

The indexing attribute may employ an Access Control List (A.C.L.) such as that which is available in WINDOWS ™ NT-type or UNIX type machines.

Preferably, the indexing process is executed by means of a server which is associated with a centralized database for storing the backup files.

Therefore, the local computer is not burdened with the task of indexing the files, and the full processing resources of the local machine are available for the user. Further, since the server compiles an overall index of all the files stored within the different machines of the network, it can be seen that the whole set of files forming the knowledge-based assets of a company or a private organisation can be stored within a centralized database and become accessible, via an unique indexing table, to the users of the network.

In a further embodiment, the server and the database of backup files and documents may be located outside the Intranet network, and the size of the software code of the agent may be substantially minimized by means of the Hyper Text Transfer (H.T.T.P. or the secure version H.T.T.P.s) or File Transfer (F.T.P.) protocols.

In yet a further embodiment, a signature is computed for each individual file or document for the purpose of determining whether said file or document is already loaded within the database of backup files and whether it has been included within the table of indexes.

Preferably, each file or document which is to be backed up and indexed is allocated a specific attribute which is used for controlling the indexing process of that file. By use of that attribute, each individual user who creates a file may retain full control of the indexing process executed in relation to that file, and therefore the files referenced within the table of indexes.

The invention also provides for a knowledge-base system adapted to automate, at the same time in a manner of which the user is unaware, the periodic backup and indexing of a user's documents stored on the computers of a network.

The invention further provides for a process which is adapted to carry out an enhanced backup system, preferably by means of a software program for a stand-alone computer, the process including the steps of opening each file which is to be backed up and, during the same operation, compiling a set of indexes representing that file for the purpose of adding to a table of indexes thereby allowing direct access to said user's documents.

In yet a further embodiment, the invention provides for a computer or network of computers adapted to carry out the method as hereinbefore described.

### Description of the drawings

An exemplary embodiment of the invention will now be described by way of example only and with reference to the accompanying drawings in which:
Figure 1 illustrates the architecture of different computers attached to an Intranet network;
Figure 2 is a drawing showing the initialization of the backup & indexing process;
Figures 3 and 4 illustrate the periodical backup and indexing process; and
Figure 5 is a flow chart of the search process into the local and the centralized indexes.

### Description of the preferred embodiment of the invention

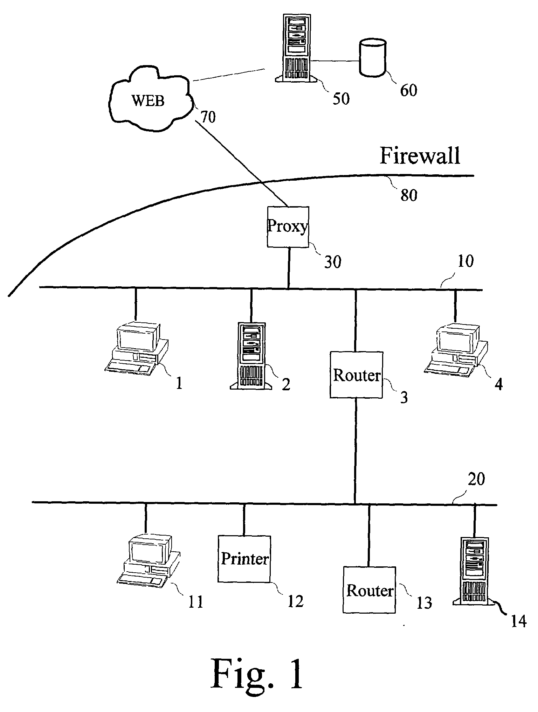

With respect to figure 1 there is shown the architecture of a corporate environment which can particularly take advantage of the backup and indexing process which will be described below. An intranet network includes a first sub-network 10 and a second sub-network 20. First sub-network 10 includes computers 1 and 4, a server 2 and a router 3 which is used for the direct connection to sub-network 20, the latter comprising a computer 11, a printer 12, router 13 and a server 14. The intranet network communicates with the Internet network 70 via a proxy 30. A firewall arrangement 80 may be used for securing the exchange of communication between the Internet network 70 and the Intranet network. As known by the man skilled in the art, a firewall is generally based on two distinctive servers: a first one collecting the information received from the Internet and which is to be forwarded inside the Intranet and a second server which is used for requests originating from the Intranet and which are to be forwarded outside the Intranet. The arrangement and operation of a firewall is well known to the skilled man and will be not be discussed further.

Each computer, such as computer 1, incorporates a Backup & Indexing agent for executing a backup procedure with respect to the files of the user's computer. This may include the system files and the documents containing user's data. In the preferred embodiment, the Backup & Indexing agent periodically collects a copy of the files which were created or modified during to the last backup operation. More particularly, an external server 50 is associated with a backup database 60 for storing the backup files and documents from all the computers and systems of the Intranet network.

Figure 1 shows a server 50 with a backup database 60 that is located outside the boundaries of the Intranet network, and which can be accessed from the Intranet via the Uniform Resources Locator (U.R.L.). It is considered that the skilled man can readily adapt the process which is described below for the purpose of storing the backup files within a database and a server located within the Intranet, for instance server 2 or server 14.

The exemplary description below will elaborate in more detail the case of the backing up the files and documents of the network within the external server 50 and database 60.

There will now be described how the backup procedure can be advantageously adapted and combined with indexing techniques for the purpose of allowing an effective backup and indexing solution adapted to a corporate environment. The procedure may implement the backup process which is specifically described in European patent application 00410062.4 entitled *"Automatic Backup*/*recovery Process"*, the disclosure of which is herein incorporated by reference.

The backup process which is described below is based on the successive transmission of a copy of the files and documents of the computers of the network to external server 50 via the firewall 80. Each document or file which is to be backed up is analysed in terms of object, and is transmitted with an object identification, an object attribute including a specific set of indexing attributes, an object signature and an object content. Once transmitted to, and received by, server 50, the documents are stored within database 60 in order to form a backup data set, which comprises the description of all the files, the attributes, the directories, and labels. This data constitutes a saved volume. Each stored object consists of an image of a backup object of the original configuration of said volume, and which is to be stored within the database 60. As it will be shown below, the identification, the attributes and the signature are used for uniquely comparing a stored object with a backup object. Additionally, the contents may be used for rebuilding an object which is saved from a previous backup.

Practically, it has been shown that the transmission of the backup objects may take substantial advantage of the FTP and particularly from the HyperText Transfer (HTTP - or its secured version HTTPs) protocol. Such an arrangement entails two substantial advantages. The first results in a simpler design of the agent component which can exploit the HTTP protocol and transmit, potentially in a secured fashion, the different backup documents through the Intranet and internet network, to the server 50. Additionally, by encapsulating the different backup objects which were defined above into HTTP POST requests, the backup objects can be reliably conveyed throughout the network even where a firewall system has been implemented in order to secure the Intranet. In particular, no adaptation of the pre-existing firewall system settings are necessary and the backup process can be immediately executed and applied, at no additional cost. This results in a substantial advantage as the skilled man is aware that, in most cases, the adaptation of existing firewall parameters can be a complex and costly operation. The process which will be described below achieves an effective backup procedure without specific adaptation of the pre-existing network configuration.

The backup and indexing process involves an initialization procedure for the purpose of creating a first set of backup files and documents stored within database 60. The initialization procedure may be launched in response to a request from the user. In one embodiment, the backup and indexing agent may be pre-installed in the local computer and be represented by a corresponding icon on the Desktop. This can be used to launch the initialization procedure. Alternatively, the Backup & Indexing agent can be downloaded from backup server 50 when the user accesses the latter via his browser.

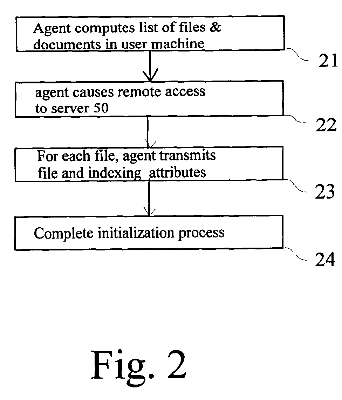

With reference to figure 2, the initialization procedure starts with a step 21 which corresponds to a compilation of an exhaustive list of the files and/or documents residing on the local user machine.

In step 22, the Backup & Indexing agent initiates remote access to the server 50 and transmits the list of system files and user documents to the server 50 For instance this may be by means of the HTTP protocol such as a HTTP POST. Other protocols can be used such as File Transfer Protocol (F.T.P.), the Network File System (N.F.S.) approach or similar models of network file systems. In the case of the H.T.T.P. protocol, the secure version of the latter may be particularly appropriate.

In step 23, the Backup and Indexing agent transmits to the remote server 50 a copy of each file and document, including the attributes. In addition to the standard attributes which are known, for example, in the context of the WINDOWS ™, NT-type or in Linux operating system, the Backup and Indexing agent transmits at least one additional attribute which is used for the purpose of controlling the indexing process executed in the server. As an example of an indexing attribute, the skilled man can use of the Access Control List (A.C.L.) known in relation to the WINDOWS ™, NT or UNIX type operating systems.

In one embodiment, a first indexing attribute is used for controlling the indexing process of the considered document and the incorporation of at least one reference to that document within the centralized index which is maintained by server 50.

In an alternative embodiment, the first indexing attribute is associated with a second indexing attribute which may be used for more precisely controlling, during the search process, selective access to the documents stored within database 60.

The process is designed for analyzing a wide variety of different user's documents, including text documents such as WORD ™, WORDPERFECT ™, OFFICE ™ documents etc...., as well as compound files which might include textual information. The analysis of the different files can be based upon an examination of the filename extension of the document files by the Backup & Indexing agent on the local machine.

When all the files and documents are transmitted to server 50, the initialization process terminates by means of step 24.

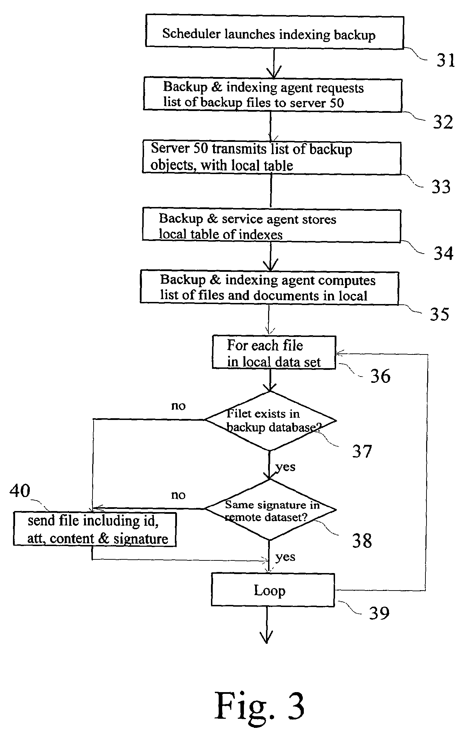

With reference to figure 3, there will be described now the periodic process which is executed for carrying out the simultaneous backup and indexing of the user's documents.

The process is initiated with step 31. This can be performed by means of a system scheduler mechanism, such as the *Sleep* function which is known for instance in relation to the WINDOWS ™ NT-type operating system. In another embodiment, it may be possible to start the backup upon the request from the user.

In a step 32, the Backup and Indexing agent initiates remote access to server 50 and a HTTP "GET" request for the purpose of obtaining a representation of the remote data set of the backup documents which are stored within the database 60.

In step 33, the server 50 transmits the list of the backup files and documents. In one embodiment, the information is transmitted by means of an XML file which contains a table with the list of the backup files and documents, including the identifiers, the attributes and the signatures. While this step is not absolutely necessary, since it is possible to keep a local image of the data set within the user's machine, it has been found to be useful to retrieve the remote data set which is actually stored within the backup server.

In addition to the list of backup files and documents, the server 50 transmits a local table of indexes of the documents in the local machine. Typically, this index takes the form of a table which provides, for each itemized reference, a list of the relevant documents with the paths for permitting a direct access. The local table of indexes will be used during the search process carried out by the Backup & Indexing agent when the user will execute a search using his machine.

In step 34, the Backup & Indexing agent receives that information from server 50 and stores it in the local machine.

In step 35, the Agent performs a local analysis of the user's configuration and identifies all the backup files which are representative of that configuration. It then establishes a local data set of backup files and documents, including the identifier, the signature, the attributes and particularly the indexing attribute(s). It should be noticed that, for the purpose of computing the signature, the agent may create a copy of the considered object, after having locked access to the latter.

In step 36, the Agent then iteratively processes each backup file or document which was identified within the local data set of backup objects.

In step 37, the process determines whether the considered file or document has the same identification on the remote data set transmitted by the server 50.

If the answer is yes, then the process checks at step 38 whether the signature of the considered backup object appears to be the same than that which is reported in the remote data set. If this is the case, the considered object appears to be unmodified, and the process then proceeds with step 39 which loops again to step 36 for processing the next file or document within the list of the local data set.

If the tests of step 37 or 38 have failed, the process proceeds with the transmission of the considered backup file to the server 50 in step 40. This is achieved by means of an appropriate HTTP s POST request with the considered object, including the identifier, the attributes, the contents and the signature. It should be noticed that, for the purpose of computing the signature of an object and processing it, the backup agent may advantageously create a local copy of the considered object, once it has been locked. As soon as the local copy is made, the original object can then be unlocked and the Agent may compute the signature on the local copy. This ensures that the considered object does not remain locked too long.

In the preferred embodiment, the backup and indexing agent incorporates a means for processing the compound files for the purpose of extracting from those the different objects and computing their signatures for the purpose of processing as explained above. This permits the processing and transmission, where necessary, of the individual components of compound files, for the purpose of reducing the amount of data to be transmitted through the network. As known by the skilled man, such compound files include .eml, .avi, .wav, .riff, .zip files. In one embodiment, the backup technique may further use differential backup and/or compression techniques for the purpose of reducing the volume of the data to be transmitted to the server.

It can be seen that that the use of the HTTP protocol allows a substantial reduction in the size of the software program necessary for implementing the Backup & Indexing agent, since it is the HTTP protocol, and particularly the secured version HTTP s which handles the main parts of the transmission process. Additionally, since the HTTP protocol is able to be readily interpreted by the firewall procedures which the IT Manager may have arranged for securing a network, the backup procedure may be readily applied within a corporate organization, and an Intranet network.

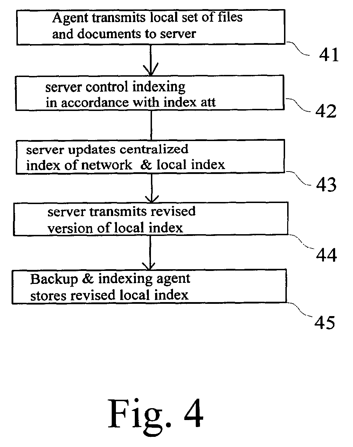

With respect to figure 4, when all the backup files and documents have been processed, the loop terminates and the Backup and Indexing Agent transmits at step 41, the list of the local set of files and documents computed in step 35. The server 50 receives that local data set and then launches a loop for processing all the files and documents contained within the remote data set. For each object which is identified within the remote set of data, the server checks whether the considered identification exists in the local data set, in which case the process loops back to the next object identified within the remote data set. However, if the file or document appears to be no longer reported within the local data set received from the backup agent, the server erases the latter from the remote data set and deletes the contents of that object within the database 60.

For any new or modified document, an indexing process is launched in a step 42 and controlled in accordance with the value of the indexing attribute assigned to that document.

In step 43, the server updates the centralized index containing the reference to all the documents existing within the Intranet network, as well as the local index.

In step 44 the server transmits to the Backup and Indexing Agent in the local machine the revised version of the local index which was computed. That local index will be used in a search process for a document which will be described hereinafter.

The Backup and Indexing Agent stores the local index at step 45, this completes the periodic backup and indexing procedure.

It can be seen that the technique modifies and extends known backup procedures which are traditionally used for creating a backup database by automatically and in parallel compiling a set of indexes which can be stored within a centralized database. The process may then use that centralized index, in association with a search engine, for automatically retrieving the documents stored within the database of backup files and documents, whatever the types of documents being considered: for example HTML, WORD ™ or even ADOBE ™ files.

The two processes are combined in such a way as to permit systematic scanning and indexing of the files located on a machine, for the purpose of constructing an index table of the files . Further, by combining the backup and the indexing facility in the same entity, i.e.; server 50, the user's computer resources remain fully dedicated to the user. This represents a substantial advantage.

While the process is particularly adapted for use in a corporate environment, it should be noted, however, that the process can be readily adapted for use with a stand-alone computer for permitting a simultaneous backup and indexing of the files located in that computer.

The process may also be readily adapted to the WINDOWS/NT-type, or LINUX operating system where attributes and rights exist for each file.

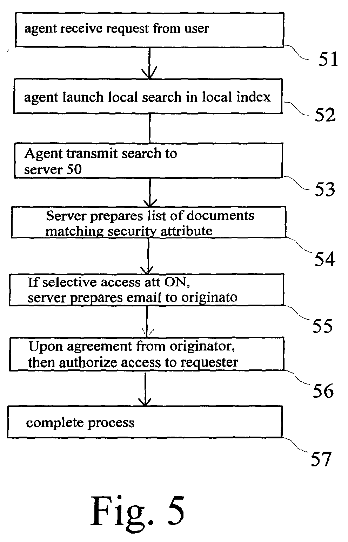

With respect to figure 5, there will be discussed now the process which is carried out by Backup & Indexing agent when the user starts a search within the index that has been compiled previously.

In step 51, the Backup and Indexing agent receives a request from the user.

In step 52, a first local search is being conducted on the local index which was received from server 50 in step 44 of figure 4.

In step 53, the local search is completed, upon request from the user, by means of an extensive search within the centralized index elaborated by server 50.

In step 54, the server 50 prepares a list of documents which are presented in accordance with the value of the second indexing attribute controlling the selective access. In one embodiment, the server can produce a HTML page containing a list of links allowing access to the documents. More particularly, for the citations of documents having a selective access attributes, the user who has requested the search is made aware of the existence of one citation within the centralized database but he may not have a direct access to that document.

If the user wishes to access one document having a selective access indexing attribute, the process automatically prepares an electronic mail which is automatically transmitted to the originator of the considered document in step 55.

In response to the originators agreement, the server 50 then automatically allows the access to the requester in step 56.

The search process then terminates at step 57.

Thus the present invention facilitates the incorporation of indexing procedures and techniques, in a way which reduces or eliminates the use of local user-based resources. This may be particularly useful in the context of a corporate environment where it is generally desirable to minimize the impact of backup, or related processes, on the performance of a local machine.

Although the invention has been described by way of example and with reference to particular embodiments it is to be understood that modification and/or improvements may be made without departing from the scope of the appended claims.

Where in the foregoing description reference has been made to integers or elements having known equivalents, then such equivalents are herein incorporated as if individually set forth.

## Claims

1. A process for indexing files residing on a computer, **characterized by** the steps of:
- executing one or more periodic backup operations on the files, said backup operation including the step of scanning the files;
- using said scanning operation to derive a set of itemized indexes for subsequent use in obtaining direct access to said files.

2. An indexing process as claimed in claim 1 **characterized in that** both text processing files and compound files are analyzed and indexed.

3. An indexing process as claimed in claim 1 or 2 **characterized in that** it is implemented in a centralized environment where a server (50) is associated with a database (60), said database adapted to store backup files and wherein said server substantially simultaneously carries out the backup and the indexing of the files.

4. An indexing process as claimed in claim 3 **characterized in that** said server (50) indexes files residing on a plurality of computers attached to, or constituting a network for the purpose of generating a centralized table of indexes loaded on said server (50).

5. An indexing process as claimed in claim 4 wherein access rights are defined for each file including at least one indexing right that is used for controlling the indexing process of the files within said centralized table of indexes.

6. An indexing process as claimed in claim 5 wherein the at least one indexing right includes: a first indexing attribute which authorizes the indexing of a given file within the centralized index; and a second indexing attribute defining selective access to that document.

7. An indexing process as claimed in claim 6 wherein after completion of the backup of files residing on a first machine, said server (50) transmits to the first machine a local table of indexes representative of the different documents stored that first machine.

8. An indexing process as claimed in any one of claims 3 to 7 wherein transfer of the files which are to be backed up uses the Hyper Text Transfer (H.T.T.P.), RCP, FTP or the like protocols.

9. An indexing process as claimed in any one of claims 1 to 8 wherein the files correspond to system and/or user files.

10. An indexing process as claimed in claim 9 wherein the indexing is performed in relation to the user files.

11. A process for searching for a file within a set of indexed files, said files stored on a plurality of computers connected to, or constituting, a network, the files being indexed in accordance with the Indexing process as claimed in claim 6 or 7, **characterized by**:
- initiating a search request for a given file, said request containing a set of key words or indexes;
- processing said search request by reference to a first local table of indexes stored on one of said plurality of computers in order to locate a first set of relevant files extracted from said one computer;
- processing, upon request from the user, an additional search within said centralized index loaded into said server for the purpose of obtaining any additional results corresponding to files stored on the backup database (60)
- displaying the result of said additional search and, for each or any file having a selective access attribute, automatically generating an electronic mail to be sent to a corresponding originator of said file for the purpose of requesting access to said file.

12. An apparatus comprising program code elements for carrying out the process as claimed in any of claims 1 to 11.

13. A computer program product comprising computer program code stored on a computer readable medium adapted, when executed on a computer, to perform the steps of any one of claims 1 to 11.

14. A knowledge-base system comprising:
- means for regularly backing up files stored on computers connected to or constituting a network;
- means for substantially simultaneously indexing the files during the backup procedure for the purpose of creating and updating a database of backup files and documents as well as a centralized index of backed up documents.

15. A backup process for a stand-alone computer **characterized by**:
- opening each file which is to be backed up;
- while opening said file, compiling a set of indexes characterizing said files and which will be incorporated into a table of indexes;
- closing said file upon completion of said backup and said indexing operation.

16. A computer programmed to operate in accordance with the process of any one of claims 1 to 11 and 15.

17. A computer network adapted to operate in accordance with the process of any one of claims 1 to 11 and 15.
